# EUROPEAN PATENT APPLICATION

(11) **EP 4 194 987 A1**
(43) Date of publication of application: **14.06.2023**
(21) Application number: 21854606.7
(22) Date of filing: 16.07.2021
(51) Int. Cl.: G05D 1/02

(54) **ENVIRONMENT CHANGE PROPOSITION SYSTEM AND ENVIRONMENT CHANGE PROPOSITION PROGRAM**

(30) Priority: 06.08.2020 JP 2020134218
(71) Applicant: OMRON Corporation, Kyoto 600-8530 (JP)
(72) Inventor: OKADA, Yasutaka, Kyoto-shi, Kyoto 600-8530 (JP); YAMADA, Ryota, Kyoto-shi, Kyoto 600-8530 (JP); SASAKI, Jun, Kyoto-shi, Kyoto 600-8530 (JP); KOGA, Tatsuya, Kyoto-shi, Kyoto 600-8530 (JP)
(74) Representative: Horn Kleimann Waitzhofer Patentanwälte PartG mbB
(86) International application number: PCT/JP2021/026734
(87) International publication number: WO 2022/030216

(57) **Abstract**

The environmental change proposing system includes: an acquiring unit configured to acquire processing information regarding processing of a conveyance task from a conveyance robot that has executed the conveyance task using an environmental map; an evaluation computing unit configured to perform an evaluation computation for evaluating, based on the processing information, a virtual layout in which the arrangement of installation objects on the environmental map has been changed; and an output unit configured to generate and output proposal information regarding a change in arrangement of the installation objects, based on an evaluation result of the evaluation computing unit.

## Description

### TECHNICAL FIELD

The present invention relates to an environmental change proposing system and an environmental change proposing program.

### RELATED ART

Mobile robots that determine paths to destinations using map information, and autonomously move to the destinations are coming more and more into practical use. A technique is known in which a mobile robot equipped with a distance sensor for recognizing a surrounding environment, upon recognizing an environment that is different from the map information, discriminates between a case where the arrangement of installation objects on the map has been changed and a case of a measurement error of the distance sensor (e.g., see Patent Document 1).

### RELATED ART DOCUMENT

### PATENT DOCUMENT

Patent Document 1: JP 2014-211775A

### SUMMARY OF THE INVENTION

### PROBLEM TO BE SOLVED BY THE INVENTION

It is becoming increasingly common that a conveyance robot that moves autonomously in an environment such as a factory or a warehouse, for example, is utilized for conveying articles, but depending on the layout of objects installed in the environment, the conveyance efficiency of the conveyance robot is decreased considerably. However, there are cases where the operator of a conveyance robot cannot easily determine with what layout the conveyance efficiency can be improved. In particular, when a large number of conveyance robots operate at the same time, or a large variety of objects need to be conveyed, the determination is especially difficult.

The present invention is for solving these problems, and aims at providing an environmental change proposing system and the like that outputs proposal information regarding the change in arrangement of objects installed in an environment in order to improve the conveyance efficiency of conveyance robots.

### MEANS FOR SOLVING THE PROBLEMS

An environmental change proposing system according to a first aspect of the present invention includes an acquiring unit configured to acquire processing information regarding processing of a conveyance task from a conveyance robot that has executed the conveyance task using an environmental map, an evaluation computing unit configured to perform an evaluation computation for evaluating, based on the processing information, a virtual layout in which the arrangement of installation objects on the environmental map has been changed, and an output unit configured to generate and output proposal information regarding a change in arrangement of the installation objects, based on an evaluation result of the evaluation computing unit. The environmental change proposing system proposes the arrangement change of installation objects as described above, and as a result, an operator of the conveyance robot or a person in charge of the facility can find out a layout with which the conveyance robot can efficiently perform conveyance tasks, without performing a complicated evaluation and trial and error.

In the environmental change proposing system above, the evaluation computing unit may generate the virtual layout based on the processing information, and perform an evaluation computation for evaluating the generated virtual layout. The environmental change proposing system automatically generates a virtual layout and automatically performs evaluation of the virtual layout, and as a result, a preferable layout can be found out, from many virtual layouts, with which the conveyance efficiency can be most improved.

Here, the environmental map may include adjacency information indicating two or more of the installation objects on the map that are required to be adjacent to each other, and the evaluation computing unit may generate the virtual layout with reference to the adjacency information. Also, the environmental map may include permanence information indicating the installation objects on the map whose placements are prohibited to be changed, and the evaluation computing unit may generate the virtual layout with reference to the permanence information. Furthermore, the environmental map may also include area information indicating areas where arrangement of the installation objects on the map is prohibited, and the evaluation computing unit may generate the virtual layout with reference to the area information. By utilizing information regarding the relationship between installation objects, the properties of the installation objects, and restrictions regarding the installation area, as described above, the environmental change proposing system can propose realistic layout. Also, the computation amount in the evaluation computation can be reduced.

In the environmental change proposing system above, the evaluation computing unit may execute an evaluation computation for the virtual layout with reference to an execution sequence of the conveyance tasks. When the conveyance robot executes a plurality of tasks, the conveyance robot needs to move from the end point of a previous task to the starting point of a subsequent task, and therefore the evaluation computation may be performed considering these movements in order to improve the overall conveyance efficiency.

An environmental change proposing program according to a second aspect of the present invention causes a computer to execute an acquiring step of acquiring processing information regarding processing of a conveyance task from a conveyance robot that has executed the conveyance task using an environmental map, an evaluation computing step of performing an evaluation computation for evaluating, based on the processing information, a virtual layout in which the arrangement of installation objects on the environmental map has been changed, and an output step of generating and outputting proposal information regarding a change in arrangement of the installation objects, based on an evaluation result in the evaluation computing step. A computer that executes this environmental change proposing program proposes an arrangement change of installation objects as described above, and as a result, an operator of the conveyance robot or a person in charge of the facility can find out a layout with which the conveyance robot can efficiently perform conveyance tasks, without performing a complicated evaluation and trial and error.

### EFFECTS OF THE INVENTION

According to the present invention, an environmental change proposing system or the like can be provided that outputs proposal information regarding an arrangement change of installation objects arranged in an environment in order to improve the conveyance efficiency of a conveyance robot.

### BRIEF DESCRIPTION OF THE DRAWINGS

FIG. 1 is a conceptual diagram illustrating a usage situation of an environmental change proposing system according to the present embodiment and a conveyance robot.
FIG. 2 is a perspective view illustrating an external appearance of the conveyance robot.
FIG. 3 is a hardware configuration diagram of a system server.
FIG. 4 is a hardware configuration diagram of the conveyance robot.
FIG. 5 is a map visually illustrating an environment in which the conveyance robot moves autonomously.
FIG. 6 is a conceptual diagram illustrating a data structure of an environmental map.
FIG. 7 is a map illustrating an execution situation of a conveyance task at a current time.
FIG. 8 is a conceptual diagram illustrating a data structure of processing information.
FIG. 9 is a conceptual diagram illustrating a data structure of a processing information table.
FIG. 10 is a conceptual diagram illustrating a generation procedure of a virtual layout.
FIG. 11 is a map visually illustrating a layout change to be proposed.
FIG. 12 is a flow chart illustrating a procedure of the system server.

### EMBODIMENTS OF THE INVENTION

Hereinafter, the present invention will be described by means of embodiments of the invention, but the invention according to the scope of the claims is not limited to the embodiments below. Also, none of the constituent elements described in the embodiments are essential to solve the problems.

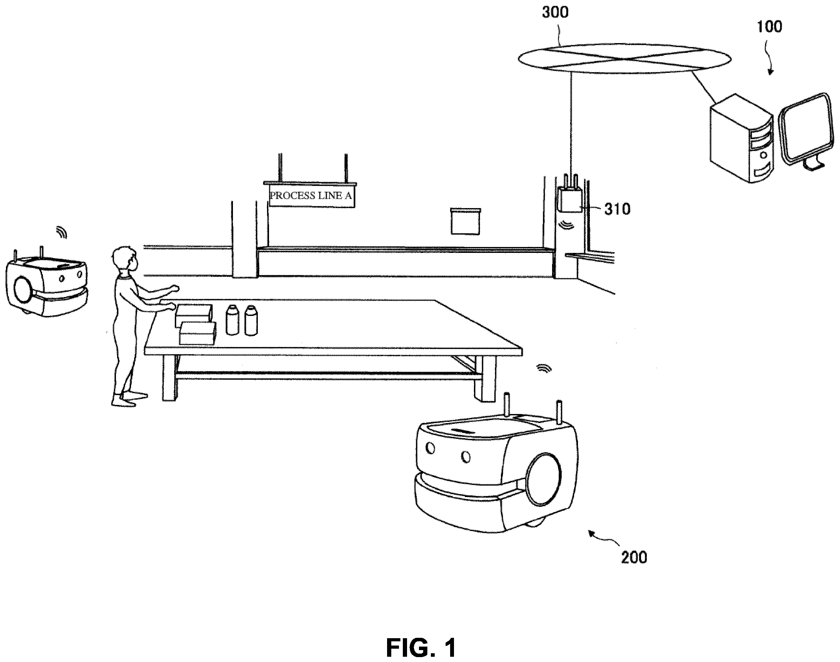

FIG. 1 is a conceptual diagram illustrating a usage situation of a system server 100 that functions as an environmental change proposing system according to the present embodiment and a conveyance robot 200 that executes a conveyance task assigned by the system server 100. The conveyance robot 200 conveys a housed object to be conveyed to a destination according to an assigned conveyance task. In the present embodiment, an environment in which persons are also present is envisioned as the environment in which the conveyance robot 200 moves autonomously, instead of an environment that is solely maintained for robots. For example, as illustrated in the diagram, the conveyance robot 200 receives processed manufacturing goods from a worker in the vicinity of a work table provided as a process line for processing manufacturing goods, and conveys the received manufacturing goods to a work table provided as a next process line. The conveyance robot 200 moves to the destination while evading persons and objects that are present on a planned moving path.

The conveyance robot 200 is connected to a network 300 via a communication unit 310 installed in the environment. Also, the system server 100 is connected to the network 300. The system server 100 assigns a conveyance task to be executed to the conveyance robot 200 via the network 300, and also receives processing information regarding processing of the conveyance task from the conveyance robot 200. Particularly, in the present embodiment, the system server 100 collects processing information, and generates proposal information regarding the change in arrangement (layout change) of objects installed in the environment. The system server 100 can also manage a plurality of conveyance robots 200 in parallel, in addition to just one conveyance robot 200. In this case, the system server 100 can acquire processing information regarding conveyance tasks from each of the conveyance robots 200.

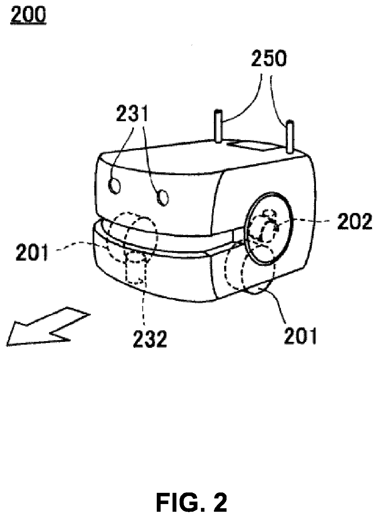

FIG. 2 is a perspective view illustrating an external appearance of the conveyance robot 200. The conveyance robot 200 includes, in a carriage unit in which mobile functions are integrated, two driving wheels 201 and one caster 202 that run on a running surface. The two driving wheels 201 are arranged such that their rotation axes match. The two driving wheels 201 are independently rotated by an unshown motor. The caster 202 is a driven wheel that rotates to move in a moving direction of the conveyance robot 200.

The conveyance robot 200 includes a stereo camera 231 in an upper portion of a front face. The stereo camera 231 includes two camera units that have the same angle of view and are spaced apart from each other, and outputs image capturing signals obtained by capturing performed by the camera units. The conveyance robot 200 can understand the distance and direction to surrounding obstacles and what the surrounding obstacle are, and the like, by analyzing the image capturing signals obtained by capturing performed by the stereo camera 231.

The conveyance robot 200 includes a laser scanner 232 in a lower portion of the front face. The laser scanner 232 scans a fixed range in a horizontal plane for each step angle, and outputs information, for each direction, indicating whether or not there is an obstacle. Moreover, if an obstacle is present, the laser scanner 232 outputs the distance to the obstacle. The conveyance robot 200 can understand whether or not an obstacle moves, and the moving direction and speed thereof if the obstacle moves, by analyzing sequential outputs of the laser scanner 232. The communication unit 250 exchanges information with the communication unit 310 installed in the environment by wireless communication.

Note that, in the present embodiment, various conveyance tasks may be executed by a plurality of conveyance robots. In this case, a plurality of types of conveyance robots whose conveyance capabilities are different may be operated, considering the size and number of objects to be conveyed, the number of conveyance tasks per unit time, and the like. Note that each conveyance robot includes the basic constituent elements similarly to the conveyance robot 200.

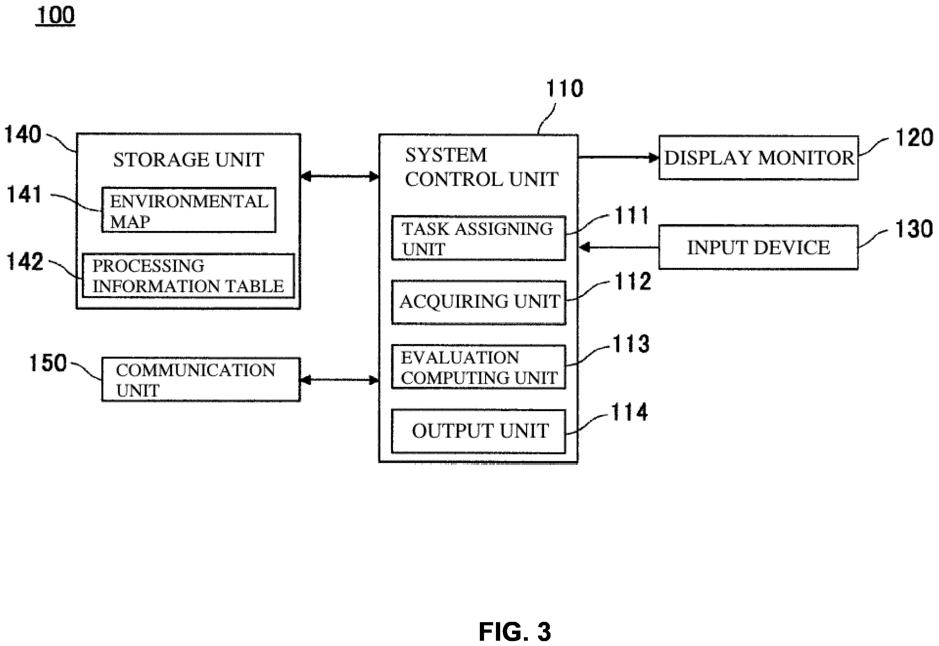

FIG. 3 is a hardware configuration diagram of the system server 100. The system server 100 is mainly constituted by a system control unit 110, a storage unit 140, and a communication unit 150.

In the present embodiment, a display monitor 120 and an input device 130 are also included such that a user can directly perform tasks such as inputting information and updating a program to the system server 100.

The system control unit 110 is a processor (CPU: central processing unit) that controls the system server 100 and executes programs. The processor may also be configured to cooperate with a computation processing chip such as an ASIC (application specific integrated circuit) or a GPU (graphics processing unit). The system control unit 110 reads out an environmental change proposing program stored in the storage unit 140, and executes various processes regarding an environmental change proposal. The display monitor 120 is a monitor equipped with a liquid crystal panel, and displays, visually recognizable, a layout and the like generated by the system server 100. The input device 130 is a keyboard and a mouse, for example, and is used by the user to create environmental map information, to set the destination of the conveyance robot 200, and the like.

The storage unit 140 is a nonvolatile storage medium, and is constituted by an HDD (hard disk drive), for example. The storage unit 140 stores, in addition to programs for executing control and processes of the system server 100, various parameter values, functions, trained models, lookup tables, and the like that are used for control and computation. In particular, the storage unit 140 stores an environmental map 141 and a processing information table 142. These are described in detail later. Note that the storage unit 140 may be constituted by a plurality of pieces of hardware, and a storage medium for storing programs and a storage medium for storing the environmental map 141 may be constituted by separate pieces of hardware, for example.

The communication unit 150 performs connection to the network 300 and data exchange with the conveyance robot 200, and is constituted by a LAN unit, for example. The communication unit 150 functions as an input/output unit for receiving input of and outputting various kinds of information and instructions, in cooperation with the system control unit 110. Also, the communication unit 150 may execute communication with other apparatuses, in addition to communication with the conveyance robot 200. For example, the communication unit 150 can communicate with mobile terminals that are carried by an operator of the conveyance robot and a person in charge of the facility, for example.

The system control unit 110 also functions as a functional computation unit that executes various computations according to processes instructed by a conveyance program and the environmental change proposing program. The system control unit 110 may function as a task assigning unit 111, an acquiring unit 112, an evaluation computing unit 113, and an output unit 114. Specific computation processes of these functional computation units will be described later.

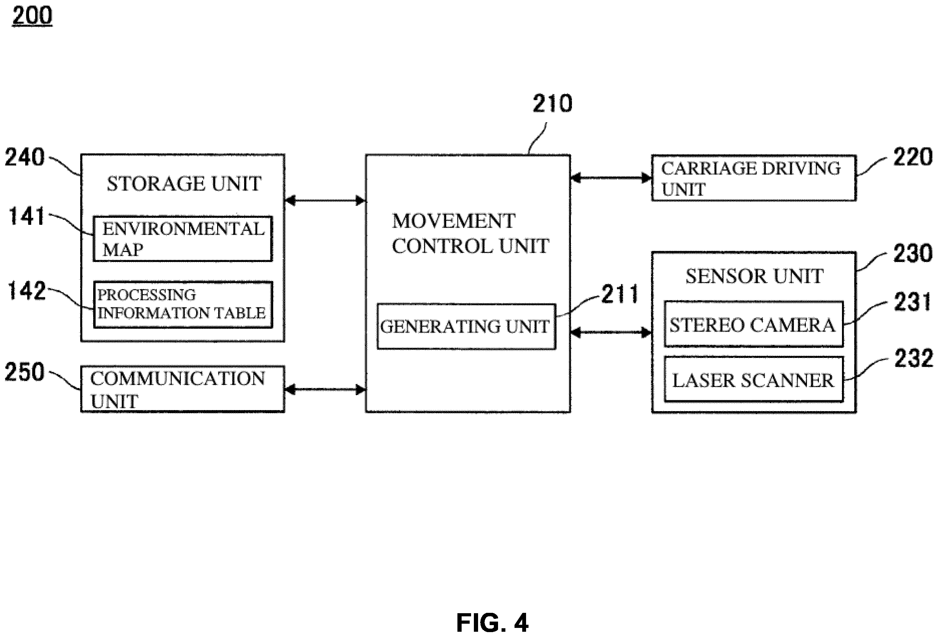

FIG. 4 is a hardware configuration diagram of the conveyance robot 200. The conveyance robot 200 is mainly constituted by a movement control unit 210, a carriage driving unit 220, a sensor unit 230, a storage unit 240, and a communication unit 250.

The movement control unit 210 is a processor (CPU) that controls the conveyance robot 200 and executes programs. The processor may also be configured to cooperate with a computation processing chip such as an ASIC or a GPU. The movement control unit 210 reads out a control program stored in the storage unit 240, and executes various processes regarding autonomous movement. Here, the movement control unit 210 may function as a generating unit 211 that generates processing information 241 regarding a conveyance task, as a functional computation unit, in particular.

The carriage driving unit 220 includes the driving wheels 201 and a driving circuit and a motor for driving the driving wheels 201. The movement control unit 210 executes rotation control of the driving wheels 201 by transmitting a drive signal to the carriage driving unit 220. Also, the movement control unit 210 understands the moving direction and moving speed of the conveyance robot 200 by receiving a feedback signal of an encoder or the like from the carriage driving unit 220.

The sensor unit 230 includes various sensors for detecting persons and obstacles that are present in a surrounding area. The stereo camera 231 and the laser scanner 232 are elements that constitute the sensor unit 230. The stereo camera 231 captures a surrounding environment in response to a request from the movement control unit 210, and transfers an image capturing signal to the movement control unit 210. The movement control unit 210 executes an analysis for recognizing an obstacle using the image capturing signal. For example, the movement control unit 210 identifies what is the obstacle using a trained model, and detects the position and orientation of the obstacle using the parallax of a stereo image.

The laser scanner 232 detects whether or not an obstacle is present in the moving direction in response to a request from the movement control unit 210, and transfers a detection signal, which is a result of the detection, to the movement control unit 210. The sensor unit 230 may include, in addition to or instead of the stereo camera 231 and the laser scanner 232, other sensors for detecting surrounding obstacles while moving. The sensor unit 230 may also include another sensor such as a sensor for monitoring the condition of the conveyance robot 200, in addition to the sensors for detecting surrounding obstacles.

The storage unit 240 is a nonvolatile storage medium, and is constituted by a solid-state drive, for example. The storage unit 240 stores, in addition to programs for executing control and processing of the conveyance robot 200, various parameter values, functions, trained models, lookup tables, and the like that are used for control and computation. In particular, the storage unit 240 stores an environmental map 141 of an environment for autonomous movement, and processing information 241 generated by the generating unit 211. The processing information 241 will be described in detail later. Note that the storage unit 240 may also be constituted by a plurality of pieces of hardware, and a storage medium for storing programs and a storage medium for storing the environmental map 141 and processing information 241 may be constituted by separate pieces of hardware, for example.

The communication unit 250 is a wireless LAN unit, for example. The movement control unit 210 exchanges various types of information with the system server 100 connected to the network 300 via the communication unit 250. The communication unit 250 functions as a transmitting unit for transmitting the processing information 241 to the system server 100, in cooperation with the movement control unit 210.

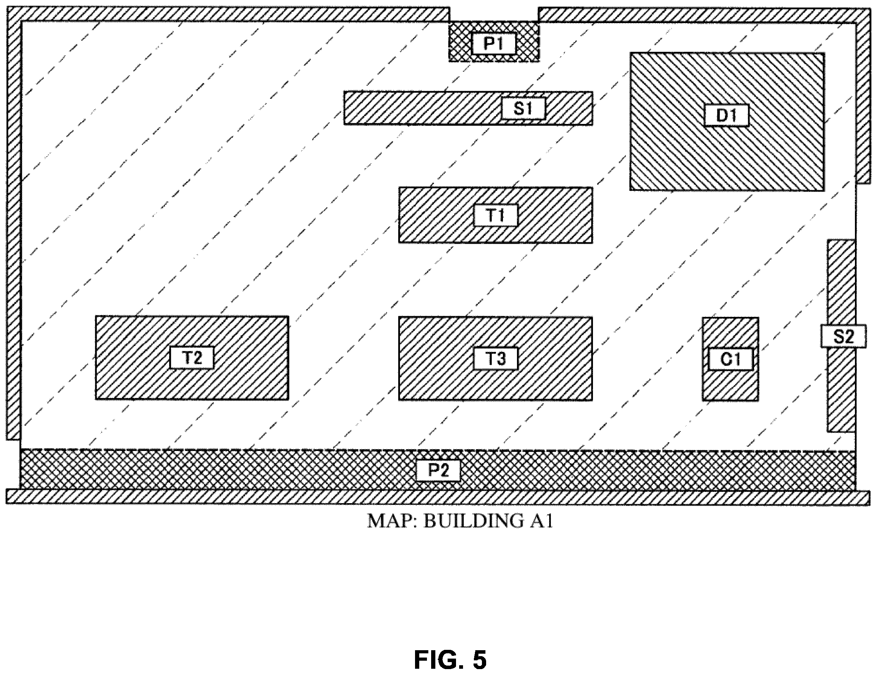

FIG. 5 is a map visually illustrating an environment in which the conveyance robot 200 moves autonomously, and is an example of a map in which obstacles on the environmental map are represented in a plan view. The environmental map is created for each facility or space partitioned depending on its purpose of use, such as a production line building, a warehouse, a conference room, and a hall, for example. The illustrated example is a production line building in which manufacturing goods are processed and the like, and illustrates a building A1 in which the conveyance robot 200 moves autonomously according to a conveyance task.

In the environmental map, a component shelf S1, a primary process line T1, a secondary process line A T2, a secondary process line B T3, an inspection desk C1, a shipment shelf S2, and an office fixture D1 are shown, inside the surrounding walls of the building, as installation objects that may be obstacles when the conveyance robot 200 moves autonomously. Note that, regarding the installation objects on the environmental map, the primary process line T1, for example, represents a work table that constitutes the primary process line. However, the "primary process line T1" does not necessarily mean a case where an actual object is installed, and may also be defined as an area where a worker performs tasks, for example. Workers are present and tools are placed in these work areas, and therefore, the conveyance robot 200 moves autonomously on a moving path that evades these areas, similarly to actual objects.

Area information indicating areas where the placement of objects is prohibited is noted on the environmental map. For example, an area in the vicinity of an entrance of the building and passages through which many people come and go are designated and noted on the map. In FIG. 5, an entry port neighboring area P1 that is set in an upper portion of the environmental map and a passage area P2 that is set in a lower portion are designated as prohibited areas.

In the illustrated layout, the component shelf S 1, the primary process line T1, and the secondary process line B T3 are arranged in order from the entry port toward the back (downward in the map). Also, an exit port is set on the right side of the environmental map, and the shipment shelf S2, the inspection desk C1, the secondary process line B T3, and the secondary process line A T2 are arranged in that order from the exit port toward the back (leftward in the map). The office fixture D1 is arranged in an upper right space of the map. The goods to be manufactured in the building A are carried in through the entry port, and processed and inspected while being transported in the order of component shelf S1, primary process line T1, secondary process line A T2, inspection desk C1, and shipment shelf S2, or in the order of component shelf S1, primary process line T1, secondary process line B T3, inspection desk C1, and shipment shelf S2, and thereafter the manufactured goods are carried out from the exit port.

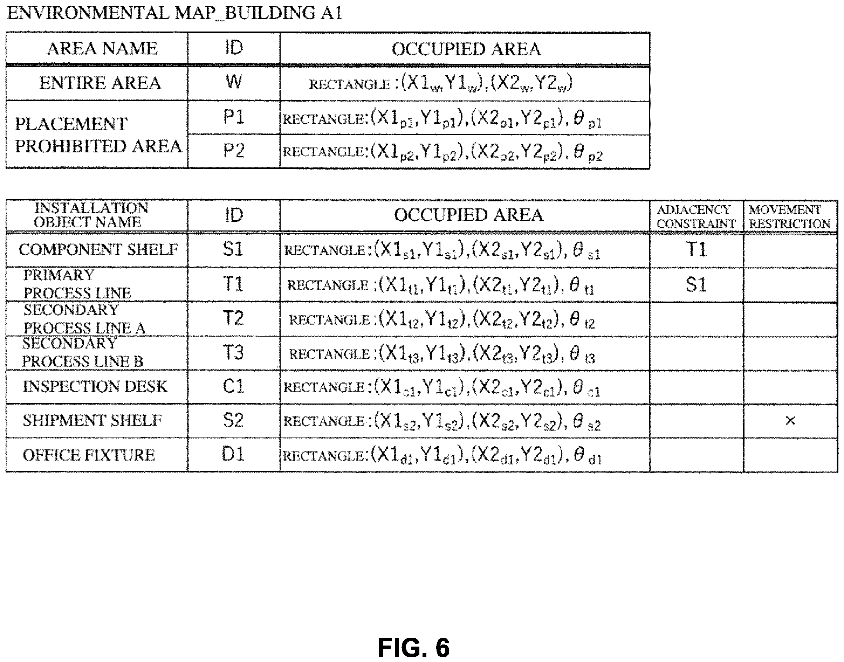

The environmental map 141 handled by the system server 100 and the conveyance robot 200 have a data structure in which installation objects are represented as data. FIG. 6 is a conceptual diagram illustrating the data structure of the environmental map representing the installation objects and the like that are shown in FIG. 5.

The data structure of the environmental map in the illustrated example includes two tables, namely an area table in which information regarding attributes of areas shown on the map is listed along with a tag of building A1, and an installation object table in which information regarding each installation object is listed. Area names, IDs, and occupied areas are listed in the area table. The area name is a name of an area occupied by a specific object, and here, a whole area indicating the entirety of the building A1 and placement prohibited areas in which the placement of installation objects is prohibited are listed. The ID is a unique symbol for distinguishing each area.

Also, the occupied area is represented by the shape and coordinates of a floor surface occupied by each area. For example, the occupied area of the whole area W is represented as follows: The projection shape is rectangular, the coordinate of an upper left vertex is (X1_{w}, Y1_{w}), the coordinate of a lower right vertex is (X2_{w}, Y2_{w}), and the rotation angle of a diagonal line is θ_{w} degrees. For example, the X-axis direction and the Y-axis direction are determined with reference to an east-west direction and a north-south direction, respectively.

An installation object name, an ID, an occupied area, an adjacency constraint, and movement restriction are entered in the installation object table for each object installed in the building A1.

The installation object name is a name of an installation object, and the ID is a unique symbol for distinguishing each installation object. The installation object name need not be a name of an actual object as described above, and may also be a name indicating a process step such as a "primary process line", for example. The occupied area indicates the area of a target space that an installation object occupies, using the shape of the installation object projected on a floor surface, and the floor surface coordinates thereof. For example, the occupied area of the component shelf S1 is represented as follows: The projection shape is rectangular, the coordinate of its upper left vertex is (X1ₛ₁, Y1ₛ₁), the coordinate of its lower right vertex is (X2ₛ₁, Y2ₛ₁), and the rotation angle of its diagonal lines is θₛ₁ degrees.

An adjacency constraint is adjacency information indicating that an installation object is required to be adjacent to the listed installation object, and more specifically, if there is such an installation object, the ID thereof is entered. For example, T1 is entered as the adjacency constraint of the component shelf S1, and this means that the component shelf S 1 is required to be adjacent to the primary process line T1. In correspondence thereto, S1 is entered as the adjacency constraint of the primary process line T1. If there are two or more installation objects that are required to be adjacent, the IDs thereof are listed as adjacency constraint.

The movement restriction is permanence information indicating that a change of the placement of the installation object is prohibited, and specifically, if the change of placement is prohibited, a flag is set. For example, a × mark is set as the flag in the movement restriction of the shipment shelf S2, and this means that the shipment shelf S2 is not allowed to be moved from the arrangement place indicated in the occupied area.

The data structure of this environmental map is created by an operator of the conveyance robot 200 or a person in charge of the facility performing input tasks to the system server 100, for example. In particular, the items regarding the placement prohibited area, adjacency constraint, and movement restriction are set by an operator or the like that performs input tasks considering the space and the properties of the installation objects. Note that the system server 100 may also update the areas occupied by the installation objects and determine the placement prohibited area using detection results of sensors installed in the environment.

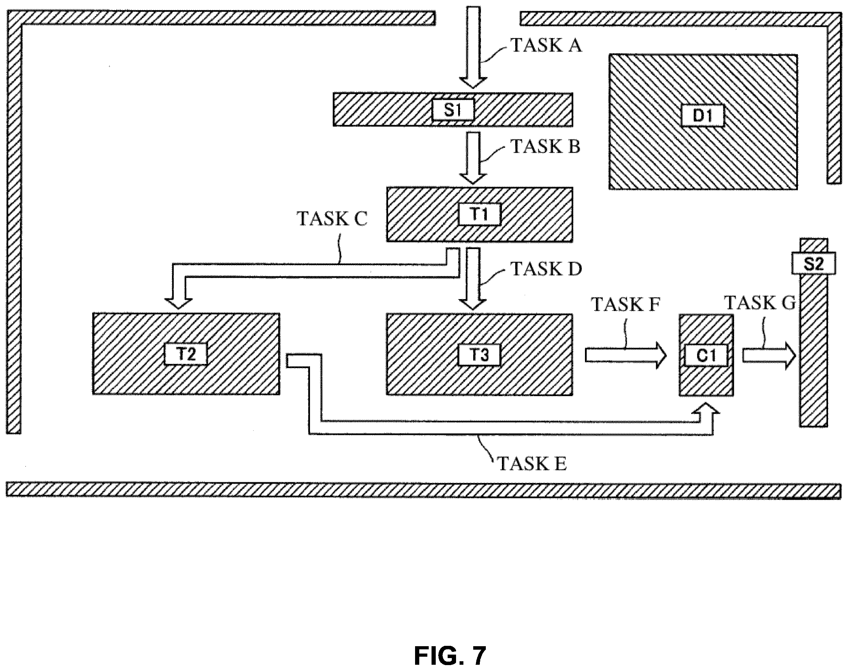

FIG. 7 is a map illustrating a situation in which a conveyance task assigned to the conveyance robot 200 in the current layout shown in FIG. 5 is executed. Each conveyance task is executed by at least one conveyance robot 200. Here, the description focuses on an outward path in which an object to be conveyed is taken in at a starting point and taken out at a destination point.

Tasks A to G are tasks for conveying an object to be conveyed. The paths of these tasks are as follows: Task A: from the entry port to the component shelf S1, task B: from the component shelf S1 to the primary process line T1, task C: from the primary process line T1 to the secondary process line A T2, task D: from the primary process line T1 to the secondary process line B T3, task E: from the secondary process line A T2 to the inspection desk C1, task F: from the secondary process line B T3 to the inspection desk C1, and task G: from the inspection desk C1 to the shipment shelf S2. The secondary process is shared and executed by the secondary process line A T2 and secondary process line B T3, and therefore manufacturing goods subjected to the primary process are conveyed to the secondary process line A T2 or the secondary process line B T3 by the task C or D depending on the conditions of the secondary process lines. Then, manufacturing goods that have been processed at the secondary process line A T2 are conveyed to the inspection desk C1 by the task E. Similarly, manufacturing goods that have been processed at the secondary process line B T3 are conveyed to the inspection desk C1 by the task F. As illustrated in the diagram, the conveyance distance of the task C is longer than the conveyance distance of the task D, and the conveyance distance of the task E is longer than the conveyance distance of the task F.

The movement control unit 210 of the conveyance robot 200 acquires a conveyance task assigned by the task assigning unit 111 of the system server 100, and the conveyance robot 200 moves autonomously on a moving path from a starting point to a destination point that are designated by the conveyance task. If the conveyance robot 200 finds a walking person or a provisionally placed cardboard box while moving autonomously, for example, the conveyance robot 200 accomplishes movement to the destination point by waiting for passing through or evading. The generating unit 211 of the conveyance robot 200 acquires logs of preset items while executing the conveyance task, and generates processing information 241.

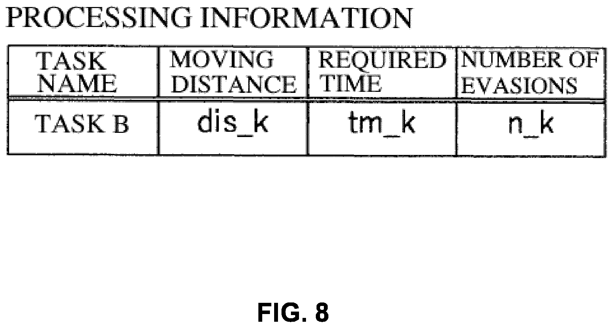

FIG. 8 is a conceptual diagram illustrating the data structure of the processing information 241. In the present embodiment, the processing information includes a task name of the conveyance task that is instructed to be executed, a moving distance, which is an actually moved distance from the designated starting point to the destination point, a required time, which is a time required for the movement, and an average number of evasions, which is an average number of times of evading obstacles while moving. For example, the moving distance can be calculated by accumulating rotation amounts of the driving wheel 201, for example.

If the conveyance robot 200 repeatedly executes the same conveyance task, the generating unit 211 generates the processing information 241 of the conveyance task for a number of times that corresponds to the number of repetitions of the conveyance task. If different tasks are successively executed, the generating unit 211 successively generates pieces of the processing information 241 whose task names are different. The generated processing information 241 is temporarily stored in the storage unit 240, and the movement control unit 210 transmits the processing information 241 to the system server 100 via the communication unit 250 in response to a request from the system server 100 or at a preset timing.

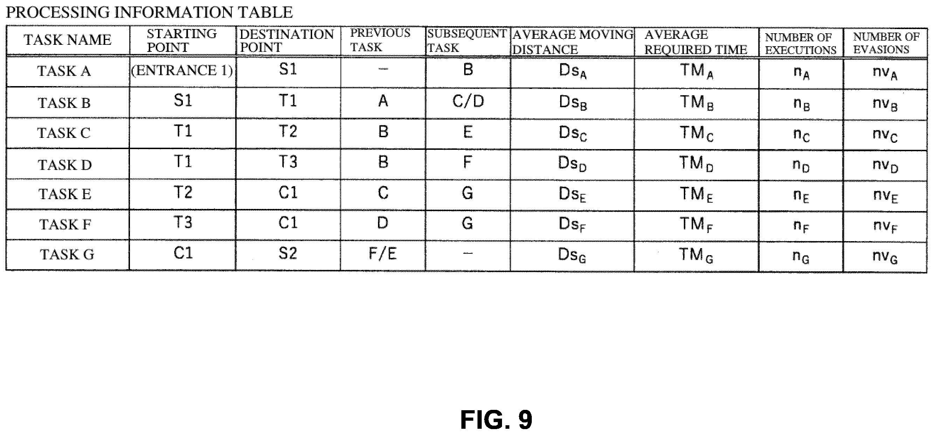

The acquiring unit 112 of the system server 100 collects the processing information 241 transmitted from the conveyance robot 200 via the communication unit 150. Also, the acquiring unit 112 creates a processing information table 142 by performing statistical processing and the like on the collected processing information 241. FIG. 9 is a conceptual diagram illustrating a data structure of the processing information table 142.

In the processing information table 142, a task name, a starting point, a destination point, a previous task, a subsequent task, an average moving distance, an average required time, a number of executions, and an average number of evasions are listed. The task name is the name of a conveyance task, and in the present embodiment, the tasks A to G to be executed in the building A1 are sequentially listed, as described using FIG. 7. As the starting point and destination point, IDs of installation objects that are the starting point and the destination point of the conveyance task are entered. When the starting point or destination point is not designated by an installation object, a specific structure such as an entry port or coordinate values in the environmental map may also be entered. Also, when a specific portion of an installation object is designated as the starting point and destination point, the specific portion may also be entered along with an ID of the installation object.

The previous task indicates a conveyance task that is performed prior to the listed conveyance task in the manufacturing flow of the goods. The subsequent task indicates a conveyance task that is performed following the listed conveyance task in the manufacturing flow of the goods. For example, manufacturing goods that were carried in the primary process line T1 by execution of the task B is subjected to the primary process, and is carried out by the task C or D. Here, the tasks C and D are entered as the subsequent task of the task B.

The average moving distance is a value obtained by calculating, for each conveyance task, an average value of moving distances in the processing information 241 transmitted from the conveyance robots 200 that executed the conveyance tasks. For example, when the acquiring unit 112 has acquired 100 pieces of processing information 241 in total from the conveyance robots 200 that executed the task A, the average moving distance Ds_{A} to be calculated is an average value of 100 moving distances stated in the processing information 241. The average required time is a value obtained by calculating, for each conveyance task, an average value of required times in the processing information 241 transmitted from the conveyance robots 200 that executed the conveyance tasks. For example, when the acquiring unit 112 has acquired 50 pieces of processing information 241 in total from the conveyance robots 200 that executed the task D, the average required time TM_{D} to be calculated is an average value of 50 required times stated in the processing information 241.

The number of executions is the number of times that the listed conveyance task was executed. It is substantially the number of pieces of processing information 241 collected for each conveyance task. The average number of evasions is a value obtained by calculating, for each conveyance task, an average value of the number of evasions in the processing information 241 transmitted from the conveyance robots 200 that executed the conveyance task. For example, when the acquiring unit 112 has acquired 50 pieces of processing information 241 in total from the conveyance robots 200 that executed the task E, the average number of evasions nv_{E} to be calculated is an average value of 50 numbers of evasions stated in the processing information 241.

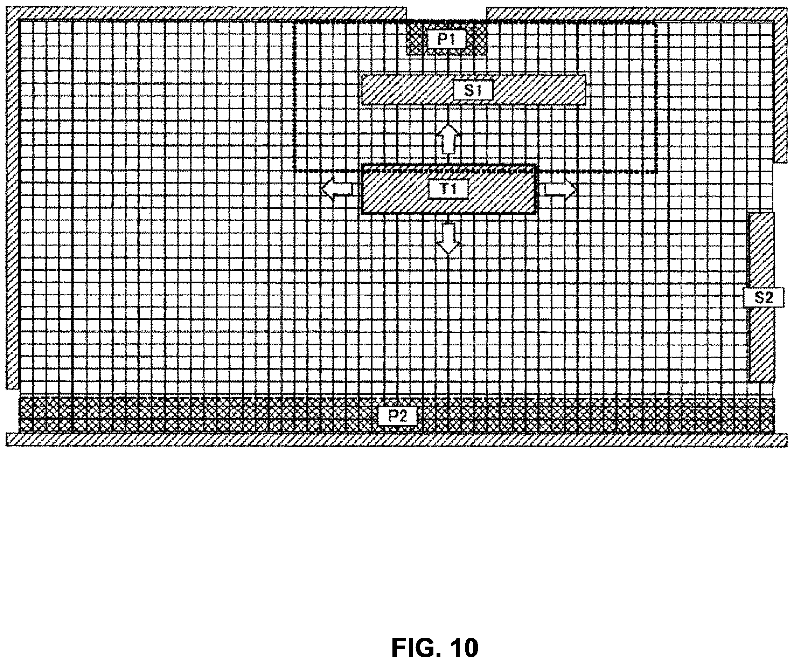

The evaluation computing unit 113 generates a virtual layout in which the arrangement of the installation objects on the environmental map 141 is changed, and performs an evaluation computation for evaluating the validity of the generated virtual layout with reference to the created processing information table 142. FIG. 10 is a conceptual diagram illustrating a generation procedure of the virtual layout.

The evaluation computing unit 113 divides the whole area shown in the environmental map 141 into lattice cells, as illustrated. The size of the cell is preset considering the computation load, the sizes of the installation objects, the required accuracy, and the like. The evaluation computing unit 113 determines a plurality of virtual layouts to be evaluated by sequentially moving the installation objects listed in the installation object table of the environmental map 141 along the cells.

When determining the virtual layout, the evaluation computing unit 113 does not arrange the installation objects to cells that overlap the placement prohibited area. As a result of this processing, a virtual layout in which an installation object is placed in the passage area P2 in which many people come and go can be avoided from being generated, for example. Also, the evaluation computing unit 113 sets adjacency prohibited cells for an installation object that has been arranged, and determines the arrangement of a next object to be arranged while avoiding the adjacency prohibited cells. For example, when the article shelf S1 has been arranged as illustrated in the diagram, the evaluation computing unit 113 sets the range surrounded by the dotted lines around the article shelf S1 as the adjacency prohibited cells. Then, the primary process line T1 to be arranged next is arranged by selecting cells that are not the adjacency prohibited cells. As described above, as a result of providing adjacency prohibited cells, the work space for a worker who works around the installation objects and the stopping space for the conveyance robot 200 can be secured. Note that the range of the adjacency prohibited cells may also be separately set depending on the properties of the installation objects.

Various other restrictions can be provided regarding the provisional arrangement of the installation objects in the virtual layout. As a result of providing these restrictions, the virtual layouts to be evaluated can be narrowed down to practical virtual layouts. For example, the installation objects for which the movement restricted flag is set in the installation object table of the environmental map 141 will not be moved. Also, if information regarding an adjacency-constrained installation object is appended to an installation object to be moved, the provisional arrangement is determined while treating them as a pair of installation objects. For example, when a first installation object is provisionally arranged, a second installation object is provisionally arranged so as to be in contact with adjacency prohibited cells provided to the provisional arrangement of the first installation object. Also, when three or more installation objects are associated by adjacency constraints, the provisional arrangement can be performed in a similar manner.

The evaluation computing unit 113 executes an evaluation computation for evaluating the validity of the virtual layouts generated in this way, with reference to the processing information table 142. Specifically, the evaluation computation is performed assuming that the conveyance tasks listed in the processing information table 142 are executed in a virtual layout to be evaluated. Then, if the evaluation value exceeds an evaluation value of the current layout, the virtual layout that is evaluated is evaluated as a layout with which the conveyance efficiency is better than the current layout.

Various evaluation functions may be used for the evaluation computation. For example, a configuration may be adopted in which a plurality of evaluation items are set, evaluation points in a virtual layout to be evaluated are calculated for the respective evaluation items, and the total sum of the evaluation points is the evaluation value. For example, when a case is considered where the total operation time of the conveyance robot 200 is the evaluation item, an average moving speed for each conveyance task is calculated using an average moving distance and an average required time. Next, moving distances of the conveyance tasks are calculated from the provisional arrangement of the virtual layout, and the estimated required times for the respective tasks are calculated by dividing the moving distances by the respective average moving speed. The total operation time of the conveyance robots 200 when the conveyance tasks are executed in the virtual layout can be calculated by multiplying the number of executions of the conveyance tasks and the respective estimated required times. It is preferable that the total operation time is shorter, and therefore a conversion formula that gives more evaluation points the shorter the calculated total operation time should be prepared.

Also, the number of evasions is calculated that is estimated when autonomous movements are executed in the conveyance tasks that are estimated for the provisional arrangement of the virtual layout using the average numbers of evasions listed in the processing information table 142. It is preferable that the number of evasions is smaller, and therefore a conversion formula that gives more evaluation points the smaller the calculated estimated number of evasions should be prepared.

Also, the information regarding the previous task and subsequent task in the processing information table 142 can also be used. When attempting to execute a large number of conveyance tasks with a small number of conveyance robots 200, there are cases where one conveyance robot 200 performs a plurality of types of conveyance tasks. In this case, it is more efficient to continuously execute a conveyance task that is subsequent to the conveyance task that has just been executed. Also, a conveyance robot 200 that is in standby in the vicinity of the primary process line T1 can immediately perform any of the tasks C and D. It can be said to be preferable that installation objects that are successively stated in the conveyance task are arranged next to each other, considering these situations. Therefore, a conversion formula should be prepared that gives more evaluation points the higher the matching degree between the arrangement order of the installation objects and the order of the installation objects stated in the conveyance tasks is. In addition thereto, the total power needed for executing the conveyance tasks, the distances to charging stations of the conveyance robots 200, the size of an object to be conveyed and path widths, and the like can also be used as evaluation items.

Upon obtaining evaluation computation results for the generated virtual layouts, the evaluation computing unit 113 extracts virtual layouts for which the conveyance efficiency is better than the current layout, and transfers the extracted virtual layouts to the output unit 114. The virtual layout(s) to be transferred to the output unit 114 may be one virtual layout for which the evaluation value is the highest, or may be a plurality of virtual layouts for which the evaluation value exceeds a threshold value. The output unit 114 outputs the virtual layout(s) as data for proposal information. When the display monitor 120 is the output destination, a display signal is output to the display monitor 120 to display the virtual layout in a map format such that the change in arrangement of the installation objects can be visually recognized. When the virtual layout is output to a terminal connected to the network 300, the virtual layout is output to the terminal via the communication unit 150.

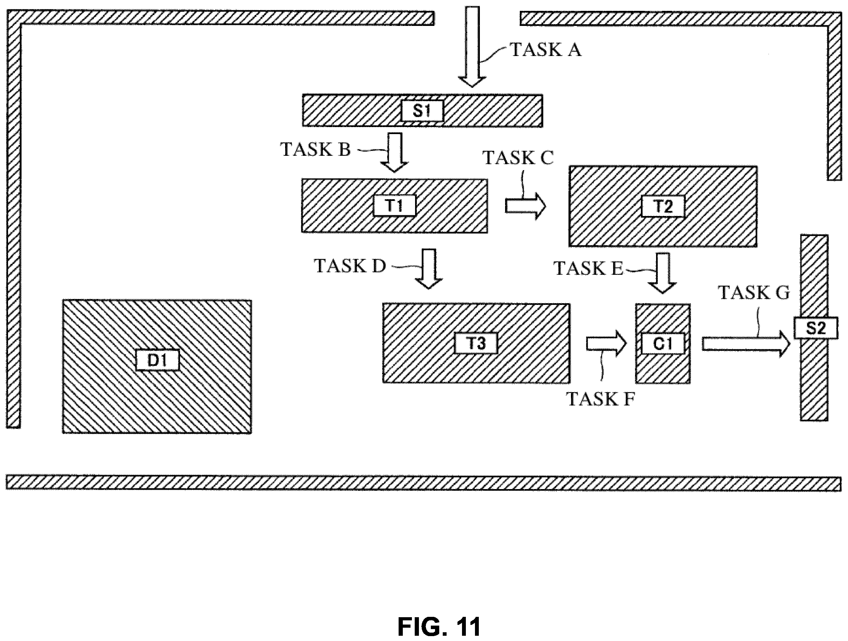

FIG. 11 is a map visually illustrating a layout change to be proposed, and shows how the layout change is displayed in the display monitor 120 or a display unit of a mobile terminal carried by an operator or the like. A layout is proposed in which, relative to the current layout shown in FIG. 7, the office fixtures D1 that is irrelevant to the conveyance tasks is moved to the lower left corner, and the other installation objects that are related to the conveyance tasks are grouped together in an area from the center to the upper right side. In particular, the secondary process line A T2 and the secondary process line B T3 are arranged at substantially equal distances from the primary process line T1 and also from the inspection desk C1, and therefore it can be understood that the moving distances of the task C and task E are reduced considerably. With this layout, the overall conveyance tasks can be more efficiently executed than with the current layout.

An operator or the like can determine whether or not the layout is actually adopted by studying the layout proposed in this way. In particular, a layout that is based on actual results of conveyance tasks is proposed, and therefore an improvement in the conveyance efficiency can be expected, and it is clearly advantageous relative to a layout that is arbitrarily determined.

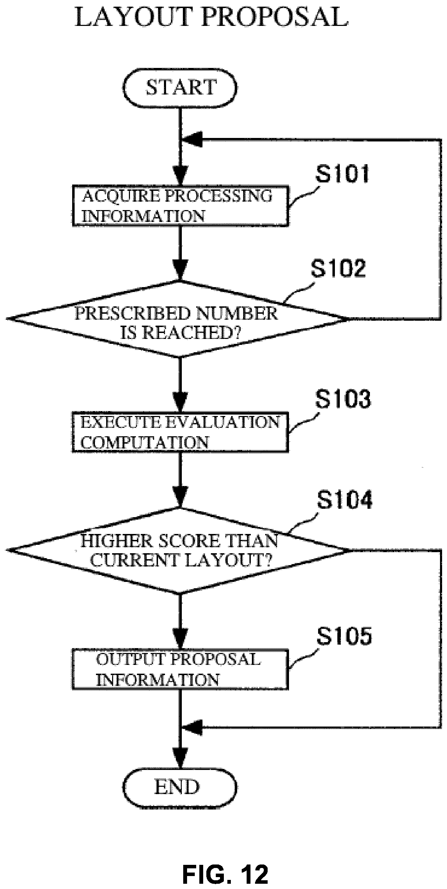

Next, the processing performed by the system server 100 up to proposing a layout change will be described. FIG. 12 is a flow chart illustrating a procedure of the system server 100. The procedure is started at a point in time at which an operator or the like makes an instruction for requesting a layout proposal.

In step S101, the acquiring unit 112 acquires processing information 241 transmitted from the conveyance robot 200. The acquiring unit 112 processes the processing information 241 that is successively transmitted, and updates the processing information table 142. In step S102, the system control unit 110 determines whether or not the number of pieces of acquired processing information 241 has reached a prescribed number. If it is determined that the number has not reached the prescribed number, the procedure returns to step S101. If it is determined that the number has reached the prescribed number, the procedure advances to step S103. Note that the determination criterion may also be another determination criterion such as whether or not a predetermined number of days has elapsed since the operation of the conveyance robot 200 was started, instead of whether or not the prescribed number has been reached, for example.

In step S103, the evaluation computing unit 113 generates virtual layouts as described above, and executes an evaluation computation for evaluating the validities of the generated virtual layouts. Then, in step S104 next, the evaluation computing unit 113 confirms whether or not a virtual layout whose score is higher than the current layout is present. If there is no such a virtual layout, then the procedure is ended without executing further processing. At this time, a message such as "no recommended layout change " may also be output. On the other hand, if there are virtual layouts whose scores are higher than the current layout, the evaluation computing unit 113 transfers these virtual layouts to the output unit 114.

In step S105, the output unit 114 outputs the virtual layouts to the display monitor 120 or the like as data of the proposal information. Accordingly, an operator or the like can decide whether the proposed layout is adopted. Thereafter, the system control unit 110 ends the procedure.

In the present embodiment described above, an example has been described in which the evaluation computing unit 113 automatically generates virtual layouts to be evaluated, but the system server 100 may also receive virtual layouts to be evaluated from an external apparatus. For example, virtual layouts generated with an external terminal may be received via the communication unit 150, or virtual layouts created by an operator or the like using the input device 130 while viewing the display monitor 120 may also be received. When virtual layouts created by an operator are received, the creation work performed by the operator or the like may be supported by not allowing movement of installation objects to the placement prohibited area, for example.

Also, the method of automatically generating virtual layouts and the method of evaluating virtual layouts described above are merely examples, and of course other methods may also be adopted. Also, the formats of the environmental map 141, processing information 241, and processing information table 142 are merely examples, and may also be other formats.

Also, the configuration of the conveyance robot 200 is not limited to the configuration described above. The driving mechanism is not limited to a configuration in which two driving wheels are adopted, and may be omni wheels or a crawler, or a mechanism for performing bipedal walking or four-leg walking may also be adopted.

Also, in the present embodiment described above, a case has been described where the system server 100 functions as the environmental change proposing system, but the elements for functioning as the environmental change proposing system may also be arranged in the conveyance robot 200, peripheral terminals, and the system server 100 in a distributed manner. In this case, the environmental change proposing system is constituted by all of the apparatuses that are arranged in a distributed manner. Alternatively, a representative conveyance robot 200 may include all of the elements for functioning as the environmental change proposing system. In this case, the representative conveyance robot 200 itself functions as the environmental change proposing system. The representative conveyance robot 200 can perform an evaluation computation using own processing information and processing information transmitted from other conveyance robots.

Here, main configurations of the environmental change proposing system and environmental change proposing program described above are summarized.

### Note 1

An environmental change proposing system including:
an acquiring unit (112) configured to acquire processing information (241) regarding processing of a conveyance task from a conveyance robot (200) that has executed the conveyance task using an environmental map (141);
an evaluation computing unit (113) configured to perform an evaluation computation for evaluating, based on the processing information (241), a virtual layout in which the arrangement of installation objects on the environmental map (141) has been changed; and
an output unit (114) configured to generate and output proposal information regarding a change in arrangement of the installation objects, based on an evaluation result of the evaluation computing unit (113).

### Note 2

The environmental change proposing system according to Note 1, wherein the evaluation computing unit (113) generates the virtual layout based on the processing information (241), and performs evaluation computation for evaluating the generated virtual layout.

### Note 3

The environmental change proposing system according to Note 2,
wherein the environmental map (141) includes adjacency information indicating two or more of the installation objects on the map that are required to be adjacent to each other, and
the evaluation computing unit (113) generates the virtual layout with reference to the adjacency information.

### Note 4

The environmental change proposing system according to Note 2 or 3,
wherein the environmental map (141) includes permanence information indicating the installation objects on the map, whose placements are prohibited to be changed, and
the evaluation computing unit (113) generates the virtual layout with reference to the permanence information.

### Note 5

The environmental change proposing system according to any one of Notes 2 to 4,
wherein the environmental map (141) includes area information indicating areas where arrangement of the installation objects on the map is prohibited, and
the evaluation computing unit (113) generates the virtual layout with reference to the area information.

### Note 6

The environmental change proposing system according to any one of Notes 1 to 5, wherein the evaluation computing unit (113) executes an evaluation computation for the virtual layout with reference to an execution sequence of the conveyance tasks.

### Note 7

An environmental change proposing program for causing a computer to execute:
an acquiring step of acquiring processing information (241) regarding processing of a conveyance task from a conveyance robot (200) that has executed the conveyance task using an environmental map (141);
an evaluation computing step of performing an evaluation computation for evaluating, based on the processing information (241), a virtual layout in which the arrangement of installation objects on the environmental map (141) has been changed; and
an output step of generating and outputting proposal information regarding a change in arrangement of the installation objects, based on an evaluation result in the evaluation computing step.

### INDEX TO THE REFERENCE NUMERALS

- 100: System server
- 110: System control unit
- 111: Task assigning unit
- 112: Acquiring unit
- 113: Evaluation computing unit
- 114: Output unit
- 120: Display monitor
- 130: Input device
- 140: Storage unit
- 141: Environmental map
- 142: Processing information table
- 150: Communication unit
- 200: Conveyance robot
- 201: Driving wheel
- 202: Caster
- 210: Movement control unit
- 211: Generating unit
- 220: Carriage driving unit
- 230: Sensor unit
- 231: Stereo camera
- 232: Laser scanner
- 240: Storage unit
- 241: Processing information
- 250: Communication unit
- 300: Network
- 310: Communication unit

## Claims

1. An environmental change proposing system comprising:
an acquiring unit configured to acquire processing information regarding processing of a conveyance task from a conveyance robot that has executed the conveyance task using an environmental map;
an evaluation computing unit configured to perform evaluation computation for evaluating, based on the processing information, a virtual layout in which the arrangement of installation objects on the environmental map has been changed; and
an output unit configured to generate and output proposal information regarding a change in arrangement of the installation objects, based on an evaluation result of the evaluation computing unit.

2. The environmental change proposing system according to claim 1, wherein the evaluation computing unit generates the virtual layout based on the processing information, and performs evaluation computation for evaluating the generated virtual layout.

3. The environmental change proposing system according to claim 2,
wherein the environmental map includes adjacency information indicating two or more of the installation objects on the map that are required to be adjacent to each other, and
the evaluation computing unit generates the virtual layout with reference to the adjacency information.

4. The environmental change proposing system according to claim 2 or 3,
wherein the environmental map includes permanence information indicating the installation objects on the map whose placements are prohibited to be changed, and
the evaluation computing unit generates the virtual layout with reference to the permanence information.

5. The environmental change proposing system according to any one of claims 2 to 4,
wherein the environmental map includes area information indicating areas where arrangement of the installation objects on the map is prohibited, and
the evaluation computing unit generates the virtual layout with reference to the area information.

6. The environmental change proposing system according to any one of claims 1 to 5, wherein the evaluation computing unit executes an evaluation computation for the virtual layout with reference to an execution sequence of the conveyance tasks.

7. An environmental change proposing program for causing a computer to execute:
an acquiring step of acquiring processing information regarding processing of a conveyance task from a conveyance robot that has executed the conveyance task using an environmental map;
an evaluation computing step of performing an evaluation computation for evaluating, based on the processing information, a virtual layout in which the arrangement of installation objects on the environmental map has been changed; and
an output step of generating and outputting proposal information regarding a change in arrangement of the installation objects, based on an evaluation result in the evaluation computing step.
